# EUROPEAN PATENT SPECIFICATION

(11) **EP 3 319 291 B1**
(45) Date of publication and mention of the grant of the patent: **30.10.2019**
(21) Application number: 16817190.8
(22) Date of filing: 23.06.2016
(51) Int. Cl.: H04L 29/06, G06F 21/34, G06F 21/42, G06K 19/06, G06F 16/245

(54) **LOGIN METHOD AND DEVICE FOR ACCOUNT NUMBER REPORTED AS LOST**
ANMELDUNGSVERFAHREN UND VORRICHTUNG FÜR ALS VERLOREN GEMELDETE KONTONUMMER
PROCÉDÉ D'OUVERTURE DE SESSION ET DISPOSITIF POUR NUMÉRO DE COMPTE SIGNALÉ PERDU

(30) Priority: 01.07.2015 CN 201510379975
(43) Date of publication of application: 09.05.2018
(73) Proprietor: Alibaba Group Holding Limited, Grand Cayman (KY)
(72) Inventor: QIAN, Jianbo, Hangzhou 310099 (CN)
(74) Representative: Conroy, John
(86) International application number: PCT/CN2016/086865
(87) International publication number: WO 2017/000826

(56) References cited:
- CN-A- 104 202 169
- CN-A- 104 219 196
- KR-A- 20120 100 548
- US-A1- 2015 095 984

## Description

### Technical Field

The present application relates to the field of network technologies, and in particular, to a login method and apparatus of a loss reported account.

### Background Art

With rapid development of network technologies, the number of network service providers such as Weibo, Taobao, and e-banks is increasing. After logging in to a corresponding network service platform by using a network account and a password, a user can use a network service provided by the platform, and this is a great convenience for people's life.

In the process of using the foregoing network service, if the user perceives that a network account thereof may have a risk of being leaked or stolen, the user may generally submit a loss report request to a network service provider. After checking the identity of the user, the network service provider may process the loss report of the network account, and freeze the network account to prevent the user account from being embezzled. Subsequently, it is only necessary for the user to submit a loss report rescission request to the network service provider, and after checking the identity of the user, the network service provider will restore the normal use of the network account.

In the prior art, loss report of a loss reported network account is generally rescinded in the following manner:
A network service provider establishes a manual telephone platform or an instant messaging service platform. When having a loss report rescission request, a user can only communicate with a customer service staff by using a telephone or an instant messaging tool, and it is necessary for the user to upload various identifications for the customer service staff to check manually. The customer service staff will restore the use of a corresponding network account after determining that the user is not an account embezzler.

However, in the process of implementing the present application, there is at least the following problem in the prior art:

In the loss report rescission process of the network account, the user cannot continue to use the network account thereof and the corresponding network service any more, thereby affecting the network life of the user.

US2015/095984 describes a receiving an alert to unlock the online user account in order to perform the user action and obtaining an unlock password from the service provider. The user registers his mobile device number with the service provider and the service provider sends the option to lock the online user account. An option to lock an online user account and possibility to unlock the online user account with the unlock password. Locking the online user account prevents any user action to be performed until the online user account is unlocked using the mobile device.

### Summary of the Invention

The invention is defined by the independent claims. Preferred embodiments are defined in the dependent claims.

### Brief Description of the Drawings

To describe the technical solutions in the embodiments of the present application or the prior art more clearly, the following briefly introduces the accompanying drawings required for describing the embodiments or the prior art. It is apparent that the accompanying drawings described in the following are merely some embodiments recorded in the present application, and those of ordinary skill in the art may still derive other drawings on the basis of these accompanying drawings without creative efforts.
FIG. 1 is a process of a login method of a loss reported account according to an embodiment of the present application.
FIG. 2 is a specific process of generating an operation code in a login method of a loss reported account according to an embodiment of the present application.
FIG. 3 is a specific process of sending an operation code in a login method of a loss reported account according to an embodiment of the present application.
FIG. 4 is a modular diagram of a login apparatus of a loss reported account according to an embodiment of the present application.

### Detailed Description

Embodiments of the present application provide a login method and apparatus of a loss reported account.

In order that those skilled in the art can better understand the technical solution in the present application, the technical solutions in the embodiments of the present application will be described clearly and completely below with reference to the accompanying drawings in the embodiments of the present application. It is apparent that the described embodiments are merely a part of embodiments, rather than all the embodiments, of the present application.

In the prior art, a user may be unable to use a loss reported account during loss report rescission processing of the loss reported account by checking identity information of the user manually. The embodiments of the present application provide a login method of a loss reported account to solve the above problem. The method is described in detail in the following with reference to the accompanying drawing.

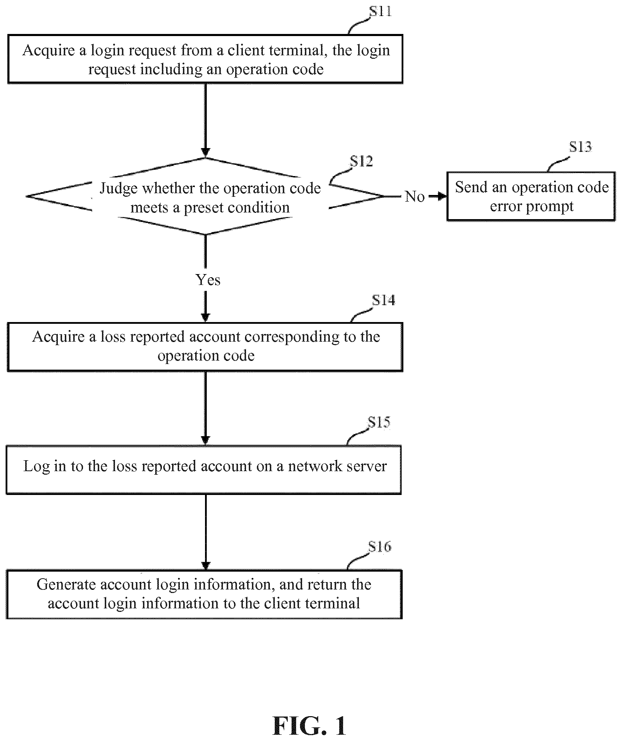

FIG. 1 is a process of a login method of a loss reported account according to an embodiment of the present application.

When an Internet-based network service is provided by a network service provider, that is, when the network service can be used only after a client terminal held by a user establishes communication with a network server, the login method may be executed by a server of the network service provider. For example, the network service provider provides an online transaction platform, and the login method provided in the embodiment of the present application is executed by using a network server of the online transaction platform.

When a local area network-based network service or a network service that can be used on a single machine is provided by a network service provider, that is, when the network service can be used without the need that a client terminal held by a user establishes communication with a network server, the login method may be executed by an offline account login module dedicated in the client terminal held by the user. For example, the network service provider provides a game service that can be used offline, the user can use a part of the game service by using a single machine, and the login method provided in the embodiment of the present application is executed by using an offline account login module in a game client terminal thereof.

In the embodiment of the present application, the login method includes the following steps:
S11: A login request is acquired from a client terminal, the login request including an operation code.

In the embodiment of the present application, the client terminal may be a dedicated APP on a mobile phone or a computer, and may also be a related login page on a browser, or may even be an ATM device of a bank.

By using an Internet-based network service provided by a network service provider as an example, before loss report is not performed for a network account of a user, the user may directly input an account name and a password of the network account thereof in an account name and password input window in a client terminal. Subsequently, the client terminal will send the input account name and password to a server. After the server confirms that the received account name and password are both correct and are matched, the account input by the user may be used for login.

In the embodiment of the present application, because loss report has been performed for the network account of the user, the user cannot log in to the account by inputting the account name and the password of the network account thereof on the client terminal. The user may input an operation code in the original account name input window or a new operation code input window on the client terminal to submit a login request of the loss reported account. After acquiring the login request containing the operation code, the client terminal transmits the login request to the network server.

Definitely, when a local area network-based network service or a network service that can be used in a single machine is provided by a network service provider, the step of acquiring a login request from a client terminal in the step S11 is specifically embodied as: an offline account login module in the client terminal acquires the login request from an account input module, in the client terminal, configured to input an account name and a password, and this is not described in detail here.

In the embodiment of the present application, the operation code may be of various types such as a QR code or a random character string. By using the operation code being a QR code as an example, the user may directly upload a picture of the QR code conveniently in the original account name input window or a new operation code input window on the client terminal, which greatly improves the user experience. Further, by using the operation code being a group of randomly generated numerals as an example, the user can also input the operation code directly on a client terminal such as an ATM device or by using, for example, a telephone platform of a telephone bank.

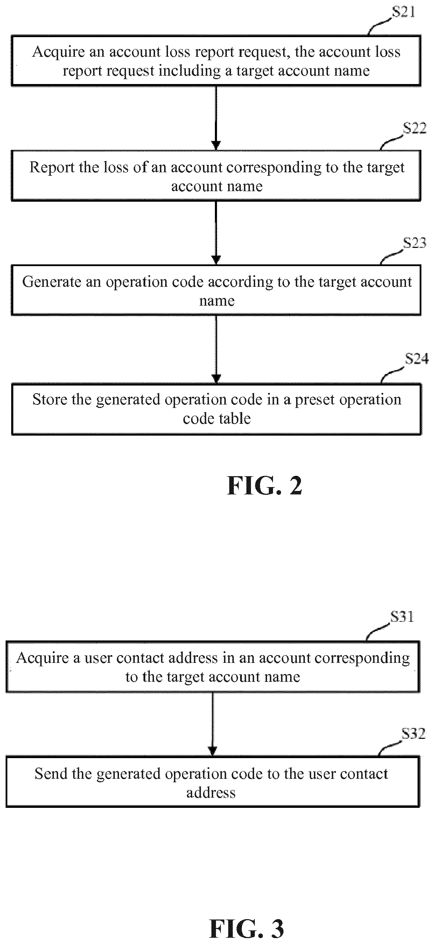

With reference to FIG. 2, in the embodiment of the present application, the operation code is generated in the following manner. The user retains the operation code, and logs in to the network account thereof by using the operation code when there is a login requirement, thus implementing that the user still can log in to the network account thereof during the loss report and the loss report rescission processing periods.

The specific process of generating the operation code includes the following steps:
S21: An account loss report request is acquired, the account loss report request including a target account name.
   In the process of using the foregoing network service, if the user perceives that the network account thereof may have a risk of being leaked or stolen, the user may submit an account loss report request to a server through a loss report window or a manual telephone window on a client terminal. Moreover, the account loss report request includes a target account name, such that the network server can clearly know the account of the user for which loss report needs to be performed.
S22: The loss report is performed for an account corresponding to the target account name.
   After confirming the identity of the user who submits the loss report request, the network server may acquire the account of the target account name, and loss report is performed for the account. After the loss report is performed, the account cannot be used for login, thereby protecting security of the account of the user.
S23: An operation code is generated according to the target account name.
   In the embodiment of the present application, the network server may convert the target account name by using a preset algorithm to obtain a unique operation code.
   By using that the network service provider provides an online transaction platform as an example, the target account name is self-defined by the user and is unique in the platform. As the target account name is unique, a unique operation code can be obtained by using the preset algorithm.
   The preset algorithm may be a common encryption and data conversion algorithm in this field, and it is only necessary to guarantee that operation codes obtained based on different target account names are not repeated. This is not described in detail here.
   Definitely, in other embodiments of the present application, the accounts and the operation codes are not limited to being one-to-one corresponding to each other. Multiple accounts may also be correlated to a same operation code. For example, a user has multiple accounts, and when user equipment may access to a phishing website by mistake or be implanted with a Trojan virus, all accounts of the user may have the risk of being stolen, and in this case, when the loss report is performed for all accounts thereof and it is confirmed that the login environment is safe, all the accounts may be logged in by using a same operation code, thus avoiding the additional burden of the user caused by memorizing multiple operation codes at the same time. Furthermore, one account may also be correlated with multiple operation codes to reduce the risk that the operation code is forgotten. This is not described in detail here.
S24: The generated operation code is stored in a preset operation code table.

The operation code is stored in the preset operation code table, such that the user and the network server can query and call the operation code conveniently.

Definitely, in other embodiments of the present application, the operation code may also be obtained only by using the steps S21 to S23. After the network server acquires the operation code from the client terminal, the preset algorithm may be run reversely to obtain the target account name corresponding to the operation code. By comparing whether the target account name exists, it can be known whether the operation code is generated during a loss report operation of the user.

With reference to FIG. 3, in the embodiment of the present application, the operation code is sent to the user in the following manner, such that the account can be logged in by using the operation code when there is a requirement for logging in to the loss reported account subsequently.

S31: A user contact address in the account corresponding to the target account name is acquired.

The user contact address is obtained by screening data in the account that is filled by the user during registration. The user contact address may include at least one of a user mobile phone number, a user email address, and a user instant messaging account.

S32: The generated operation code is sent to the user contact address.

By generating and sending the operation code, the user may obtain an operation code correlated with the loss reported account after the user performs the loss report for the account. The user retains the operation code, and can log in to the account by using the operation code when there is a login requirement.

Definitely, in other embodiments of the present application, the operation code may not be sent to the user in the foregoing manners, but is directly stored in the network server. The user can query the network server by directly using the account name thereof, thus obtaining the operation code.

S12: It is judged whether the operation code meets a preset condition, and if no, step S13 is performed; if yes, step S14 is performed.

In the embodiment of the present application, the preset condition may include: the operation code being in the preset operation code table. The preset operation code table is obtained by using the foregoing steps S21 to S24. When the operation code acquired by the network server is located in the preset operation code table, it indicates that the operation code is generated by the network server, that is, the operation code has a correlated account.

Definitely, in the embodiment where the operation code is generated only by using the foregoing steps S21 to S23, the preset condition may be adaptively adjusted to: an account name corresponding to the operation code being in a preset account name table. In other words, when the account name is a registered account name, it is determined that the operation code meets the preset condition.

In the embodiment of the present application, the preset condition may further include: whether the number of times of using the operation code is within a preset threshold of the number of times.

The preset threshold of the number of times may be defined according to a user requirement. The threshold may be set to one, and in this case, the operation code will be automatically invalid after being used once. Definitely, the threshold may also be set to a large number, and in this case, the operation code can be used limitlessly in an actual operation.

Definitely, when it is preset that the operation code can be used limitlessly, the step of judging whether the number of times of using the operation code is within a preset threshold of the number of times may not be performed, and this is not described in detail here.

S13: An operation code error prompt is sent.

When the network server clearly knows that the acquired operation code does not meet the preset condition, an operation code error prompt is sent to the client terminal or the user contact address, so as to remind the user to confirm whether the operation code is correctly filled.

S14: A loss reported account corresponding to the operation code is acquired.

In the embodiment of the present application, the preset account name table may be queried by using the operation code, and the account name corresponding to the operation code may also be obtained by running the foregoing preset algorithm reversely, thereby obtaining the corresponding loss reported account.

S15: The loss reported account is logged in on the network server.

In the embodiment of the present application, the network server acquires a preset account permission according to the operation code, and logs in to the loss reported account by using the preset account permission.

The preset account permission may be preset according to a user requirement. For example, the preset account permission may only include an account loss report rescission permission, and may include a query permission in addition to the loss report rescission permission, and the like. The preset account permission may even be set to open all permissions of the account, such that the user controls the account completely.

Moreover, the preset account permission may also be set according to the importance and activity of the account. For example, an account query permission may be opened for a VIP user having a high account activity and having a query requirement frequently. Only an account loss report rescission permission is opened for a common user having a low account activity.

S16: Account login information is generated, and the account login information is returned to the client terminal.

The account login information includes regular data types such as the preset account permission. After the network server logs in to the loss reported account, the client terminal also acquires the account login information; therefore, the client terminal also logs in to the loss reported account, and the user can continuously enjoy the network service at the client terminal.

Definitely, in other embodiments of the present application, logging in to the loss reported account on the network server and storing the account login information may also be implemented only by using the foregoing steps S11 to S15. The client terminal acquires the account login information by another active application, and the loss reported account can also be logged in on the client terminal. This is not described in detail here.

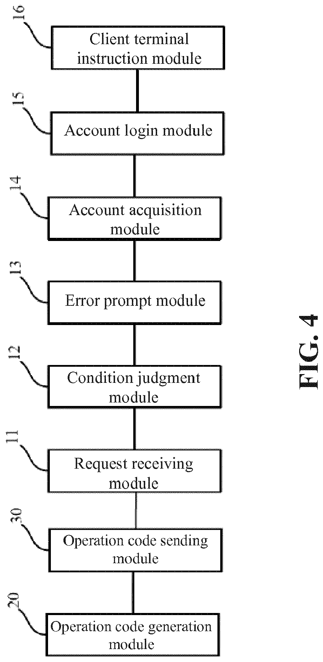

FIG. 4 is a modular diagram of a login apparatus of a loss reported account according to an embodiment of the present application.

When an Internet-based network service is provided by a network service provider, that is, when the network service can be used only after a client terminal held by a user and establishes communication with a network server, the login method may be executed by a server of the network service provider. For example, the network service provider provides an online transaction platform, and the login method provided in the embodiment of the present application is executed by using a network server of the online transaction platform.

When a local area network-based network service or a network service that can be used on a single machine is provided by the network service provider, that is, when the network service can be used without the need that a client terminal held by a user establishes communication with a network server, the login method may be executed by an offline account login module dedicated in the client terminal held by the user. For example, the network service provider provides a game service that can be used offline, the user can use a part of the game service by using a single machine, and the login method provided in the embodiment of the present application is executed by using an offline account login module in a game client terminal thereof.

In the embodiment of the present application, the login apparatus includes the following parts.

A request receiving module 11 is configured to receive a login request from a client terminal, the login request including an operation code.

In the embodiment of the present application, the client terminal may be a dedicated APP on a mobile phone or a computer, and may be a related login page on a browser, or may even be an ATM device of a bank.

By using an Internet-based network service provided by a network service provider as an example, before loss report is not performed for a network account of a user, the user may directly input an account name and a password of the network account thereof in an account name and password input window in the client terminal. Subsequently, the client terminal will send the input account name and password to the server. After the server confirms that the received account name and password are both correct and are matched, the account input by the user may be used for login.

In the embodiment of the present application, because loss report has been performed for the network account of the user, the user cannot log in to the account by inputting the account name and the password of the network account thereof on the client terminal. The user may input an operation code in the original account name input window or a new operation code input window on the client terminal to submit a login request of the loss reported account. After acquiring the login request containing the operation code, the client terminal transmits the login request to the network server.

Definitely, when a local area network-based network service or a network service that can be used in a single machine is provided by the network service provider, the step of acquiring a login request from a client terminal by the request receiving module 11 is specifically embodied as: an offline account login module in the client terminal acquires the login request from an account input module, in the client terminal, configured to input an account name and a password, and this is not described in detail here.

In the embodiment of the present application, the operation code may be of various types such as a QR code or a random character string. By using the operation code being a QR code as an example, the user may directly upload a picture of the QR code conveniently in the original account name input window or a new operation code input window on the client terminal, which greatly improves the user experience. By using the operation code being a group of randomly generated numerals as an example, the user can also input the operation code directly on a client terminal such as an ATM device or by using, for example, a telephone platform of a telephone bank.

In the embodiment of the present application, the login apparatus includes an operation code generation module 20 configured to generate an operation code. The user retains the operation code, and logs in to the network account thereof by using the operation code when there is a login requirement, thus implementing that the user still can log in to the network account thereof during the loss report and the loss report rescission processing periods.

The operation code generation module 20 is specifically configured to:
first acquire an account loss report request, the account loss report request including a target account name.

In the process of using the foregoing network service, if the user perceives that the network account thereof may have a risk of being leaked or stolen, the user may submit an account loss report request to a server through a loss report window or a manual telephone window on a client terminal. Moreover, the account loss report request includes a target account name, such that the network server can clearly know the account of the user for which loss report needs to be performed.

The operation code generation module 20 is further configured to perform loss report for an account corresponding to the target account name.

After confirming the identity of the user who submits the loss report request, the network server may acquire the account of the target account name, and loss report is performed for the account. After the loss report is performed, the account cannot be used for login, thereby protecting security of the account of the user.

The operation code generation module 20 is then configured to generate an operation code according to the target account name.

In the embodiment of the present application, the network server may convert the target account name by using a preset algorithm to obtain a unique operation code.

By using that the network service provider provides an online transaction platform as an example, the target account name is self-defined by the user and is unique in the platform. As the target account name is unique, a unique operation code can always be obtained by using the preset algorithm.

The preset algorithm may be a common encryption and data conversion algorithm in this field, and it is only necessary to guarantee that operation codes obtained based on different target account names are not repeated. This is not described in detail here.

Definitely, in other embodiments of the present application, the accounts and the operation codes are not limited to being one-to-one corresponding to each other. Multiple accounts may also be correlated to a same operation code. For example, a user has multiple accounts, and when user equipment may access to a phishing website by mistake or be implanted with a Trojan virus, all accounts of the user may having a risk of being stolen, and in this case, when the loss report is performed for all accounts thereof and it is confirmed that the login environment is safe, all the accounts may be logged in by using a same operation code, thus avoiding the additional burden of the user caused by memorizing multiple operation codes at the same time. Moreover, one account may also be correlated with multiple operation codes to reduce the risk that the operation code is forgotten. This is not described in detail here.

The operation code generation module 20 is finally configured to store the generated operation code in a preset operation code table.

The operation code is stored in the preset operation code table, such that the user and the network server can query and call the operation code conveniently.

Definitely, in other embodiments of the present application, the operation code may also be obtained by the operation code generation module 20 only through the foregoing three steps. After the network server acquires the operation code from the client terminal, the preset algorithm may be run reversely to obtain the target account name corresponding to the operation code. By comparing whether the target account name exists, it can be known whether the operation code is generated during a loss report operation of the user.

In the embodiment of the present application, the login apparatus further includes an operation code sending module 30. After the operation code generation module generates the operation code according to the target account name, the operation code sending module is configured to send the operation code to the user. Therefore, the account can be logged in by using the operation code when there is a requirement for logging in to the loss reported account subsequently.

First, a user contact address in the account corresponding to the target account name is acquired.

The user contact address is obtained by screening data in the account that is filled by the user during registration. The user contact address may include at least one of a user mobile phone number, a user email address, and a user instant messaging account.

Then, the generated operation code is sent to the user contact address.

By generating and sending the operation code, the user may obtain an operation code correlated with the loss reported account after the user performs loss report for the account. The user retains the operation code, and can log in to the account by using the operation code when there is a login requirement.

Definitely, in other embodiments of the present application, the operation code may not be sent to the user in the foregoing manners, but is directly stored in the network server. The user can query the network server directly by using the account name thereof, thus obtaining the operation code thereof.

A condition judgment module 12 is configured to judge whether the operation code meets a preset condition.

In the embodiment of the present application, the preset condition may include: the operation code being in the preset operation code table. The preset operation code table is obtained by the operation code generation module. When the operation code acquired by the network server is located in the preset operation code table, it indicates that the operation code is generated by the network server, that is, the operation code has a correlated account.

Definitely, in the embodiment where the operation code is generated by the operation code generation module only through the foregoing three steps, the preset condition may be adaptively adjusted to: an account name corresponding to the operation code is in a preset account name table. In other words, when the account name is a registered account name, it is determined that the operation code meets the preset condition.

In the embodiment of the present application, the preset condition may further include: whether the number of times of using the operation code is within a preset threshold of the number of times.

The preset threshold of the number of times may be defined according to a user requirement. The threshold may be set to one, and therefore, the operation code will be automatically invalid after being used once. Definitely, the threshold may also be set to a large number, and in this case, the operation code can be used limitlessly in an actual operation.

Definitely, when it is preset that the operation code can be used limitlessly, the step of judging whether the number of times of using the operation code is within a preset threshold of the number of times may not be performed, and this is not described in detail here.

An error prompt module 13 is configured to send an operation code error prompt when the operation code does not meet the preset condition.

When the network server clearly knows that the acquired operation code does not meet the preset condition, an operation code error prompt is sent to the client terminal or the user contact address, so as to remind the user to confirm whether the operation code is correctly filled.

An account acquisition module 14 is configured to, if the operation code meets the preset condition, acquire a loss reported account corresponding to the operation code.

In the embodiment of the present application, the preset account name table may be queried by using the operation code, and the account name corresponding to the operation code may also be obtained by running the foregoing preset algorithm reversely, thereby obtaining the corresponding loss reported account.

An account login module 15 is configured to log in to the loss reported account on a network server.

In the embodiment of the present application, the network server acquires a preset account permission according to the operation code, and logs in to the loss reported account by using the preset account permission.

The preset account permission may be preset according to a user requirement. For example, the preset account permission may only include an account loss report rescission permission, and may include a query permission in addition to the loss report rescission permission, and the like. The preset account permission may even be set to open all permissions of the account, such that the user controls the account completely.

Moreover, the preset account permission may also be set according to the importance and activity of the account. For example, an account query permission may be opened for a VIP user having a high account activity and having a query requirement frequently. Only an account loss report rescission permission is opened for a common user having a low account activity.

In the embodiment of the present application, the login apparatus further includes a client terminal instruction module 16 configured to generate account login information, and return the account login information to the client terminal.

The account login information includes regular data types such as the preset account permission. After the network server logs in to the loss reported account, the client terminal also acquires the account login information, and therefore, the client terminal also logs in to the loss reported account, and the user can continuously enjoy the network service at the client terminal.

Definitely, in other embodiments of the present application, logging in to the loss reported account on the network server and storing the account login information may also be implemented only by using the request receiving module 11, the condition judgment module 12, the error prompt module 13, the account acquisition module 14, and the account login module 15. The client terminal acquires the account login information by another active application, and the loss reported account can also be logged in on the client terminal. This is not described in detail here. In the 1990s, an improvement on a technology may be obviously distinguished as an improvement on hardware (for example, an improvement on a circuit structure such as a diode, a transistor, and a switch) or an improvement on software (an improvement on a method procedure). However, with the development of technologies, improvements of many method procedures at present may be considered as direct improvements on hardware circuit structures. Almost all designers program the improved method procedures into hardware circuits to obtain corresponding hardware circuit structures. Therefore, it cannot be assumed that the improvement of a method procedure cannot be implemented by using a hardware entity module. For example, a Programmable Logic Device (PLD) (for example, a Field Programmable Gate Array (FPGA)) is such an integrated circuit, and logic functions thereof are determined by a user through programming devices. Designers program by themselves to "integrate" a digital system into a piece of PLD, without the need that a chip manufacturer designs and manufactures a dedicated integrated circuit chip 2. Moreover, at present, the programming is mostly implemented by using "logic compiler" software, instead of manually manufacturing an integrated circuit chip. The software is similar to a software complier used for developing and writing a program, and original codes before compiling also need to be written by using a specific programming language, which is referred to as a Hardware Description Language (HDL). There are many types of HDLs, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, and RHDL (Ruby Hardware Description Language), among which VHDL (Very-High-Speed Integrated Circuit Hardware Description Language) and Verilog2 are most commonly used now. Those skilled in the art also should know that a hardware circuit for implementing the logic method procedure may be easily obtained only by slightly logically programming the method procedure using the above several hardware description languages and programming it into an integrated circuit.

A controller may be implemented in any suitable manner. For example, the controller may be in the form of, for example, a microprocessor or a processor and a computer readable medium storing computer readable program codes (for example, software or firmware) executable by the (micro)processor, a logic gate, a switch, an Application Specific Integrated Circuit (ASIC), a programmable logic controller, and an embedded micro-controller. Examples of the controller include, but not limited to, the following micro-controllers: ARC 625D, Atmel AT91SAM, Microchip PIC18F26K20, and Silicone Labs C8051F320. A memory controller may also be implemented as a part of control logic of a memory. Those skilled in the art also know that, in addition to implementing the controller by using pure computer readable program codes, the method steps may be undergone logic programming to enable the controller to implement the same function in a form of a logic gate, a switch, an application specific integrated circuit, a programmable logic controller and an embedded microcontroller. Therefore, this type of controller may be considered as a hardware component, and apparatuses included therein and used for implementing various functions may also be considered as structures inside the hardware component. Or, further, the apparatuses used for implementing various functions may be considered as both software modules for implementing the method and structures inside the hardware component.

The system, apparatus, module or unit illustrated in the above embodiments may specifically be implemented by using a computer chip or an entity, or a product having a certain function.

For ease of description, when the apparatus is described, it is divided into various units in terms of functions for respective description. Definitely, when the present application is implemented, functions of the units may be implemented in the same or multiple software and/or hardware.

Those skilled in the art should understand that the embodiments of the present invention may be provided as a method, an apparatus, or a computer program product. Therefore, the present invention may be implemented as a complete hardware embodiment, a complete software embodiment, or an embodiment combing software and hardware. Moreover, the present invention may be a computer program product implemented on one or more computer usable storage media (including, but not limited to, a magnetic disk memory, a CD-ROM, an optical memory, and the like) including a computer usable program code.

The present invention is described with reference to flow charts and/or block diagrams according to the method, device (apparatus) and computer program product according to the embodiments of the present invention. It should be understood that a computer program instruction may be used to implement each process and/or block in the flow charts and/or block diagrams and combinations of processes and/or blocks in the flow charts and/or block diagrams. These computer program instructions may be provided for a general-purpose computer, a special-purpose computer, an embedded processor, or a processor of any other programmable data processing device to generate a machine, such that the instructions executed by a computer or a processor of any other programmable data processing device generate an apparatus for implementing a specified function in one or more processes in the flowcharts and/or in one or more blocks in the block diagrams.

These computer program instructions may also be stored in a computer readable memory that can instruct the computer or any other programmable data processing device to work in a particular manner, such that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing terminal device, such that a series of operations and steps are performed on the computer or another programmable terminal device, thereby generating computer-implemented processing. Therefore, the instructions executed on the computer or another programmable device provide steps for implementing a specified function in one or more processes in the flowcharts and/or in one or more blocks in the block diagrams.

In a typical configuration, a computer device includes one or more processors (CPU), an input/output interface, a network interface, and a memory.

The memory may include a volatile memory, a random access memory (RAM) and/or a non-volatile memory or the like in a computer readable medium, for example, a read-only memory (ROM) or a flash RAM. The memory is an example of the computer readable medium.

The computer readable medium includes non-volatile and volatile media as well as movable and non-movable media, and can implement information storage by means of any method or technology. Information may be a computer readable instruction, a data structure, and a module of a program or other data. A storage medium of a computer includes, for example, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read only memory (CD-ROM), a digital versatile disc (DVD) or other optical storages, a cassette tape, a magnetic tape/magnetic disk storage or other magnetic storage devices, or any other non-transmission medium, and can be used to store information accessed by the computing device. According to the definition of this text, the computer readable medium does not include transitory media, such as a modulated data signal and a carrier.

It should be further noted that the term "include", "comprise" or other variations thereof are intended to cover non-exclusive including, so that a process, method, commodity or device including a series of elements not only includes the elements, but also includes other elements not clearly listed, or further includes inherent elements of the process, method, commodity or device. In a case without any more limitations, an element defined by "including a/an..." does not exclude that the process, method, commodity or device including the element further has other identical elements.

Those skilled in the art should understand that the embodiments of the present application may be provided as a method, an apparatus, or a computer program product. Therefore, the present application may be implemented as a completely hardware embodiment, a completely software embodiment, or an embodiment combing software and hardware. Moreover, the present application may be a computer program product implemented on one or more computer usable storage media (including, but not limited to, a magnetic disk memory, a CD-ROM, an optical memory, and the like) including computer usable program codes.

The present application may be described in a common context of a computer executable instruction performed by a computer, for example, a program module. Generally, the program module includes a routing, a program, an object, an assembly, a data structure, and the like used for executing a specific task or implementing a specific abstract data type. The present application may also be implemented in a distributed computing environment, and in the distributed computer environment, a task is performed by using remote processing devices connected through a communications network. In the distributed computer environment, the program module may be located in a local and remote computer storage medium including a storage device.

Various embodiments in the specification are described in a progressive manner. The same or similar parts between the embodiments may be referenced to one another. In each embodiment, the portion that is different from other embodiments is focused and described. Especially, the device embodiment is basically similar to the method embodiment, so that it is described simply, and for related parts, reference may be made to the description of the parts in the method embodiment.

The above description is merely embodiments of the present application, and are not intended to limit the present application. The scope of the invention is defined by the claims.

## Claims

1. A method for logging into a loss reported account, comprising:
performing a loss report for an account on a network server to acquire the loss reported account, wherein performing the loss report includes deactivating logging into the account based on inputting an account name and a password during a loss rescission processing period of the loss reported account, the account being registered with the account name and the password;
receiving a login request at the network server from a client terminal, the login request comprising an operation code correlated with the loss reported account (S11);
determining, at the network server, whether the operation code meets a preset condition (S12), wherein determining whether the operation code meets the preset condition further comprises determining whether the number of times the operation code is used is within a preset threshold of a number of times, wherein the threshold is more than one;
if yes, acquiring the loss reported account corresponding to the operation code (S14) and acquiring a preset account permission according to the operation code; and
based on the preset account permission, logging in to the loss reported account on the network server during the loss rescission processing period (S15).

2. The method of claim 1, further comprising:
generating account login information for the loss reported account (S16), the account login information including the preset account permission; and
providing the account login information to the client terminal.

3. The method of claim 2, further comprising:
at the client terminal, acquiring the account login information; and
logging-in loss reported account at the client terminal for user interaction

4. The method of claim 3, further comprising:
at the client terminal, providing an operation code input window for receiving the operation code; and
transmitting the operation code to the network server in a login request containing the operation code.

5. The method of claim 1, wherein performing the loss report for the account on the network server further comprises:
obtaining an account loss report request at the network server, the loss report request comprising the account name of the loss report account (S21); and
generating the operation code according to the account name (S23).

6. The method of claim 5, wherein after the step of generating the operation code according to the account name, the login method further comprises:
obtaining a user contact address associated with the account corresponding to the account name (S31); and
sending the generated operation code to the user contact address (S32).

7. The method of claim 5, wherein the user contact address comprises at least one of a user mobile phone number, a user email address, and a user instant messaging account.

8. The method of claim 4, wherein the step of generating the operation code according to the account name comprises:
converting the account name according to a preset algorithm to obtain the operation code, wherein the generated operation code is uniquely defined in an online transaction platform of the network server.

9. The method of claim 4, wherein after the step of generating the operation code according to the account name, the login method further comprises:
storing the generated operation code in a preset operation code table (S24).

10. The method of claim 1, further comprising:
receiving, at the network server, a query request including the account name of the loss reported account;
based on the account name, obtaining the operation code for the loss reported account; and
providing the operation code to a user of the client terminal.

11. The method of claim 1, wherein the preset condition comprises: the operation code being in a preset operation code table.

12. The method of claim 4, wherein acquiring the loss reported account corresponding to the operation code comprises:
obtaining the corresponding account name by either:
querying an account name table according to the operation code, wherein the account table includes registered account names of accounts of the network server and corresponding operation codes; or
reversely performing a preset algorithm on the operation code to obtain the corresponding loss reported account.

13. The method of claim 8 or 12, wherein the preset algorithm is performed when generating the operation code according to the account name.

14. An apparatus for logging into a loss reported account, comprising a plurality of modules configured to perform steps according to the method of any one of claims 1 to 13.

## Patentansprüche

1. Verfahren zum Anmelden in ein als verloren gemeldetes Konto, umfassend:
Erstellen eines Verlustberichts für ein Konto auf einem Netzwerkserver, um das als verloren gemeldete Konto zu erfassen, wobei das Erstellen des Verlustberichts das Deaktivieren des Anmeldens in das Konto basierend auf dem Eingeben eines Kontonamens und eines Passworts während eines Verlustrückgängigmachungsverarbeitungszeitraums des als verloren gemeldeten Kontos umfasst, wobei das Konto mit dem Kontonamen und dem Passwort registriert wird;
Empfangen einer Anmeldeanforderung auf dem Netzwerkserver von einem Client-Endgerät, wobei die Anmeldeanforderung einen Operationscode umfasst, der dem als verloren gemeldeten Konto (S11) entspricht;
auf dem Server Bestimmen, ob der Operationscode eine voreingestellte Bedingung (S12) erfüllt, wobei das Bestimmen, ob der Operationscode die voreingestellte Bedingung erfüllt, ferner das Bestimmen umfasst, ob die Häufigkeit, mit der der Operationscode genutzt wird, innerhalb einer voreingestellten Schwelle einer Häufigkeit liegt, wobei die Schwelle größer ist als eins;
falls ja, Erfassen des als verloren gemeldeten Kontos gemäß dem Operationscode (S14) und Erfassen einer voreingestellten Kontoberechtigung gemäß dem Operationscode; und
basierend auf der voreingestellten Kontoberechtigung Anmelden in das als verloren gemeldete Konto auf dem Netzwerkserver während des Verlustrückgängigmachungsverarbeitungszeitraums (S15).

2. Verfahren nach Anspruch 1, ferner umfassend:
Erzeugen von Kontoanmeldeinformationen für das als verloren gemeldete Konto (S16), wobei die Kontoanmeldeinformationen die voreingestellte Kontoberechtigung umfassen; und
Bereitstellen der Kontoanmeldeinformationen für das Client-Endgerät.

3. Verfahren nach Anspruch 2, ferner umfassend:
auf dem Client-Endgerät Erfassen der Kontoanmeldeinformationen; und
Anmelden bei dem als verloren gemeldeten Konto auf dem Client-Endgerät zur Benutzerinteraktion.

4. Verfahren nach Anspruch 3, ferner umfassend:
auf dem Client-Endgerät Bereitstellen eines Operationscodeeingabefensters zum Aufnehmen des Operationscodes; und
Senden des Operationscodes an den Netzwerkserver in einer den Operationscode enthaltenden Anmeldeanforderung.

5. Verfahren nach Anspruch 1, wobei das Erstellen des Verlustberichts für das Konto auf dem Netzwerkserver ferner umfasst:
Erhalten einer Kontoverlustberichtanforderung auf dem Netzwerkserver, wobei die Verlustberichtanforderung den Kontonamen des als verloren gemeldeten Kontos (S21) umfasst; und
Erzeugen des Operationscodes entsprechend dem Kontonamen (S23).

6. Verfahren nach Anspruch 5, wobei nach dem Schritt des Erzeugens des Operationscodes entsprechend dem Kontonamen, das Anmeldeverfahren ferner umfasst:
Erhalten einer mit dem Konto verknüpften Benutzerkontaktadresse, entsprechend dem Kontonamen (S31); und
Senden des erzeugten Operationscodes an die Benutzerkontaktadresse (S32).

7. Verfahren nach Anspruch 5, wobei die Benutzerkontaktadresse mindestens eins von einer Mobiltelefonnummer, einer E-Mail-Adresse des Benutzers und einem Instant-Messaging-Konto des Benutzers umfasst.

8. Verfahren nach Anspruch 4, wobei der Schritt des Erzeugens des Operationscodes entsprechend dem Kontonamen umfasst:
Umwandeln des Kontonamens gemäß einem voreingestellten Algorithmus, um den Operationscode zu erhalten, wobei der erzeugte Operationscode in einer Online-Transaktionsplattform des Netzwerkservers eindeutig definiert ist.

9. Verfahren nach Anspruch 4, wobei nach dem Schritt des Erzeugens des Operationscodes entsprechend dem Kontonamen, das Anmeldeverfahren ferner umfasst:
Speichern des erzeugten Operationscodes in einer voreingestellten Operationscodetabelle (S24).

10. Verfahren nach Anspruch 1, ferner umfassend:
Empfangen einer Abfrageanforderung auf dem Netzwerkserver, die den Kontonamen des als verloren gemeldeten Kontos umfasst;
basierend auf dem Kontonamen Erhalten des Operationscodes für das als verloren gemeldete Konto; und
Bereitstellen des Operationscodes für einen Benutzer des Client-Endgeräts.

11. Verfahren nach Anspruch 1, wobei die voreingestellte Bedingung umfasst: den in einer voreingestellten Operationscodetabelle enthaltenen Operationscode.

12. Verfahren nach Anspruch 4, wobei das Erfassen des dem Operationscode entsprechenden als verloren gemeldeten Kontos umfasst:
Erhalten des entsprechenden Kontonamens durch entweder:
Abfragen einer Kontonamentabelle gemäß dem Operationscode, wobei die Kontotabelle registrierte Kontonamen von Konten des Netzwerkservers und entsprechende Operationscodes umfasst; oder
umgekehrtes Ausführen eines voreingestellten Algorithmus auf dem Operationscode, um das entsprechende als verloren gemeldete Konto zu erhalten.

13. Verfahren nach Anspruch 8 oder 12, wobei der voreingestellte Algorithmus beim Erzeugen des Operationscodes entsprechend dem Kontonamen ausgeführt wird.

14. Vorrichtung zum Anmelden in ein als verloren gemeldetes Konto, umfassend eine Vielzahl von Modulen, die dazu ausgelegt sind, die Schritte gemäß dem Verfahren nach einem der Ansprüche 1 bis 13 durchzuführen.

## Revendications

1. Procédé de connexion à un compte à rapport de perte, comprenant :
réaliser un rapport de perte pour un compte sur un serveur de réseau pour acquérir le compte à rapport perte, la réalisation du rapport de perte comprenant la désactivation de la connexion au compte sur la base d'une entrée d'un nom de compte et d'un mot de passe pendant une période de traitement d'annulation de perte du compte à rapport de perte, le compte étant enregistré avec le nom de compte et le mot de passe ;
recevoir une demande de connexion au niveau du serveur de réseau à partir d'un terminal de client, la demande de connexion comprenant un code d'opération en corrélation avec le compte à rapport de perte (S11) ;
déterminer, au niveau du serveur de réseau, si le code d'opération satisfait ou non une condition prédéfinie (S12), la détermination du point de savoir si le code d'opération satisfait ou non la condition prédéfinie comprenant en outre la détermination du point de savoir si le nombre de fois où le code d'opération est utilisé se trouve ou non à l'intérieur d'un seuil prédéfini de nombre de fois, le seuil étant supérieur à un ;
si tel est le cas, acquérir le compte à rapport de perte correspondant au code d'opération (S14) et acquérir une autorisation de compte prédéfinie selon le code d'opération ; et
sur la base de l'autorisation de compte prédéfinie, se connecter au compte à rapport de perte sur le serveur de réseau pendant la période de traitement d'annulation de perte (S15).

2. Procédé selon la revendication 1, comprenant en outre :
générer des informations de connexion au compte pour le compte à rapport de perte (S16), les informations de connexion au compte comprenant l'autorisation de compte prédéfinie ; et
fournir les informations de connexion au compte au terminal de client.

3. Procédé selon la revendication 2, comprenant en outre :
au niveau du terminal de client, acquérir les informations de connexion au compte ; et
se connecter au compte à rapport de perte au niveau du terminal de client pour une interaction d'utilisateur.

4. Procédé selon la revendication 3, comprenant en outre :
au niveau du terminal de client, fournir une fenêtre d'entrée de code d'opération pour recevoir le code d'opération ; et
transmettre le code d'opération au serveur de réseau dans une demande de connexion contenant le code d'opération.

5. Procédé selon la revendication 1, dans lequel la réalisation du rapport de perte pour le compte sur le serveur de réseau comprend en outre :
obtenir une demande de rapport de perte de compte au niveau du serveur de réseau, la demande de rapport de perte comprenant le nom de compte du compte à rapport de perte (S21) ; et
générer le code d'opération selon le nom de compte (S23).

6. Procédé selon la revendication 5, dans lequel, après l'étape de génération du code d'opération selon le nom de compte, le procédé de connexion comprend en outre :
obtenir une adresse de contact d'utilisateur associée au compte correspondant au nom de compte (S31) ; et
envoyer le code d'opération généré à l'adresse de contact d'utilisateur (S32).

7. Procédé selon la revendication 5, dans lequel l'adresse de contact d'utilisateur comprend au moins l'un parmi un numéro de téléphone mobile d'utilisateur, une adresse de courrier électronique d'utilisateur et un compte de messagerie instantanée d'utilisateur.

8. Procédé selon la revendication 4, dans lequel l'étape de génération du code d'opération selon le nom de compte comprend :
convertir le nom de compte selon un algorithme prédéfini pour obtenir le code d'opération, le code d'opération généré étant défini de manière unique dans une plateforme de transaction en ligne du serveur de réseau.

9. Procédé selon la revendication 4, dans lequel, après l'étape de génération du code d'opération selon le nom de compte, le procédé de connexion comprend en outre :
stocker le code d'opération généré dans une table de code d'opération prédéfinie (S24).

10. Procédé selon la revendication 1, comprenant en outre :
recevoir, au niveau du serveur de réseau, une demande d'interrogation comprenant le nom de compte du compte à rapport de perte ;
sur la base du nom de compte, obtenir le code d'opération pour le compte à rapport de perte ; et
fournir le code d'opération à un utilisateur du terminal de client.

11. Procédé selon la revendication 1, dans lequel la condition prédéfinie comprend : le code d'opération qui est dans une table de code d'opération prédéfinie.

12. Procédé selon la revendication 4, dans lequel l'acquisition du compte à rapport de perte correspondant au code d'opération comprend :
obtenir le nom de compte correspondant soit :
en interrogeant une table de noms de compte selon le code d'opération, la table de compte comprenant des noms de compte enregistrés de comptes du serveur de réseau et des codes d'opération correspondants ; soit en effectuant de manière inverse un algorithme prédéfini sur le code d'opération pour obtenir le compte à rapport de perte correspondant.

13. Procédé selon la revendication 8 ou 12, dans lequel l'algorithme prédéfini est effectué lors de la génération du code d'opération selon le nom de compte.

14. Appareil pour se connecter à un compte à rapport de perte, comprenant une pluralité de modules configurés pour effectuer des étapes selon le procédé selon l'une quelconque des revendications 1 à 13.
